Europäisches Patentamt

European Patent Office ·

Office européen des brevets

(11) Publication number: 0 245 530
A1

# (12) EUROPEAN PATENT APPLICATION

(21) Application number: 86106444.2

(22) Date of filing: 12.05.86

(51) Int. Cl.⁴: B25J 19/00 , B25J 18/02

(43) Date of publication of application:
19.11.87 Bulletin 87/47

(84) Designated Contracting States:
CH DE FR GB IT LI SE

(71) Applicant: Cincinnati Milacron Inc.
(a Delaware Corporation), 4701 Marburg
Avenue
Cincinnati, Ohio 45209(US)

(72) Inventor: Dunn, Donald
1845 Greenbriar Place, Cincinnati
Ohio 45237(US)

(74) Representative: Lally, William et al
FORRESTER & BOEHMERT
Widenmayerstrasse 4/I
D-8000 München 22(DE)

(54) Industrial manipulator.

(57) In an industrial manipulator (10) a controlled fluid
environment for a robotic wrist drive motor (32) is
achieved by mounting the motor (32) within a motor
cavity (33) in the front portion (18) of a hollow
support arm (17). An end cap (19) is affixed to the
rear end of the support arm, and cooling fluid, inert
fluids and the like are ported through the end cap
(19) into the motor cavity(33). Alternatively the ports
(40, 41) may be utilised to withdraw air from the
cavity and to retain a vacuum therein.

FIG.2

"Industrial Manipulator"

This invention relates broadly to industrial manipulators, and specifically to industrial robots which employ a motor proximate to a work zone, for example: a wrist drive motor employed at the wrist of a paint spraying robot.

In paint spraying robots, and other robots which employ a wrist drive motor at or near the work site, it is frequently the practice to substitute a hydraulic motor for an electric motor, since an electric motor has the potential for generating sparks and may thus create a hazardous condition in a volatile atmosphere such as exists with paint solvents and the like. Hydraulic motors may be disadvantageous for the reasons that they are generally very heavy mechanisms requiring relatively heavy hydraulic lines and they frequently leak hydraulic fluid. The leaked fluid is often objectionable and may contaminate a work environment.

While explosion proof electric motors have been developed, they are generally available only for certain commonly-used motor frame sizes and types. Further explosion proof motors tend to be of a more heavy design than that usually employed in electric prime movers.

Electric motors and other prime movers generate heat while performing work and, most often, the only cooling provided for motors used in robot designs is through simple convection in an air atmosphere.

According to this invention there is provided an industrial manipulator comprising a movable member adapted to carry a work performing apparatus, the movable member providing a cavity in which a drive motor for the work performing apparatus is located, means being provided for maintaining a controlled environment in the cavity.

By controlling the environment immediately surrounding the motor, the following objectives may be obtained:

(i) an explosion-resistant atmosphere can be provided by excluding oxygen and volatile substances from the environment immediately surrounding the motor and replacing same with a vacuum or an inert fluid such as nitrogen;

(ii) forced cooling may be provided for the motor so that the life of the motor is enhanced and dimensional stability of the drive components will tend to be insured by using a temperature-controlled fluid surrounding the drive motor.

Thus, said means for maintaining the controlled environment in the cavity may be operative continuously to circulate fluid through said cavity, or may be operative to facilitate the delivery of a static fluid to the cavity and thereafter to retain the fluid in the cavity.

The fluid may thus be a chemically inert fluid and/or cooling fluid, and may be a liquid or a gas, including air.

Alternatively said means for maintaining a controlled environment in the cavity may be operative to facilitate the evacuation of the cavity and thereafter to retain a low pressure within the cavity.

According to this invention there is also provided an industrial manipulator comprising:

(a) a linearly movable member adapted to receive a work performing apparatus and defining a cavity, said cavity being adapted:

(i) to receive a motor which is adapted to engage the work performing apparatus; and

(ii) to receive a non-flammable fluid environment surrounding the motor;

(b) a motor mounted in said cavity;

(c) a support means for supporting the member for linear movement; and

(d) a feed means for providing said fluid in said cavity.

According to this invention there is also provided an industrial manipulator comprising:

(a) a linearly movable member adapted to receive a work performing apparatus and defining a cavity, the cavity being adapted

(i) to receive a motor which is adapted to engage the work performing apparatus; and

(ii) to receive a non-flammable environment surrounding the motor;

(b) a motor mounted in said cavity;

(c) a support means for supporting the member for linear movement; and

(d) means for providing a substantial vacuum in said cavity.

There will now be given a detailed description, to be read with reference to the accompanying drawings, of an industrial manipulator which is a preferred embodiment of this invention, and which has been selected for the purposes of illustating the invention by way of example.

In the accompany drawings:

FIGURE 1 is a perspective view of the preferred embodiment, showing a linear support arm thereof;

FIGURE 2 is a longitudinal elevational section through the linear support arm of the industrial robot of Figure 1; and

FIGURE 3 is a left end elevational view of the robot support arm.

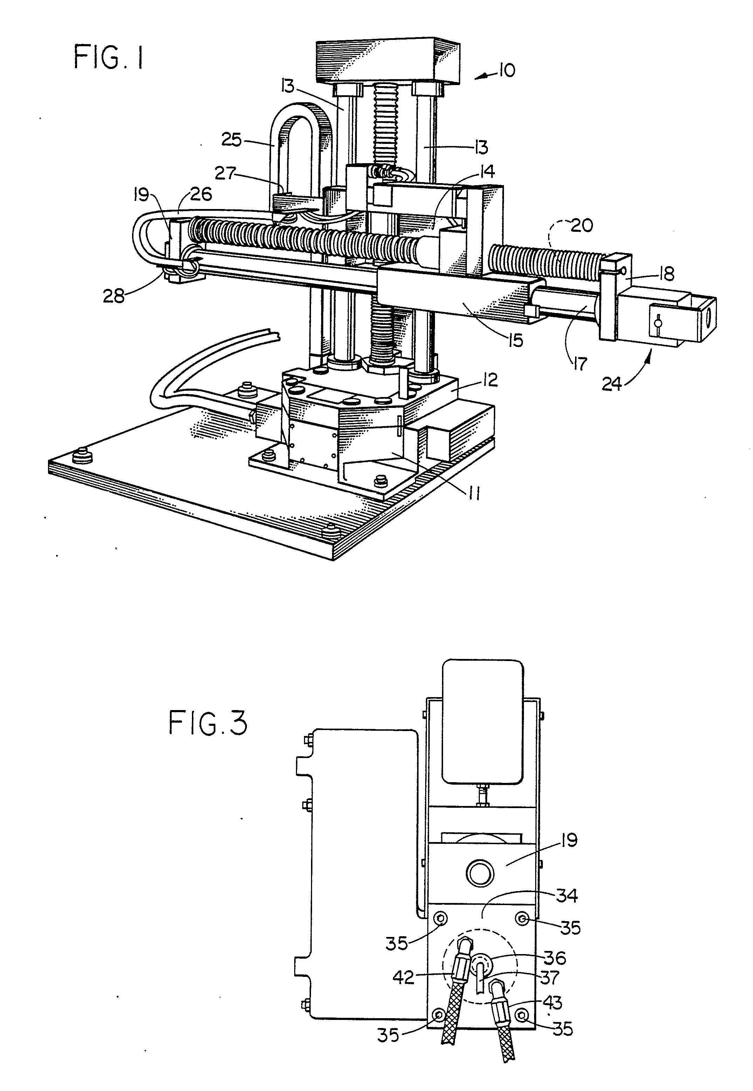

Figure 1 of the drawings depicts an industrial robot 10 of the type and class known as Model 363, manufactured by Cincinnati Milacron Inc., the assignee of the present invention. The robot 10 has a stationary base 11, supporting a platform 12 which is rotatable around a vertical axis on the base 11.

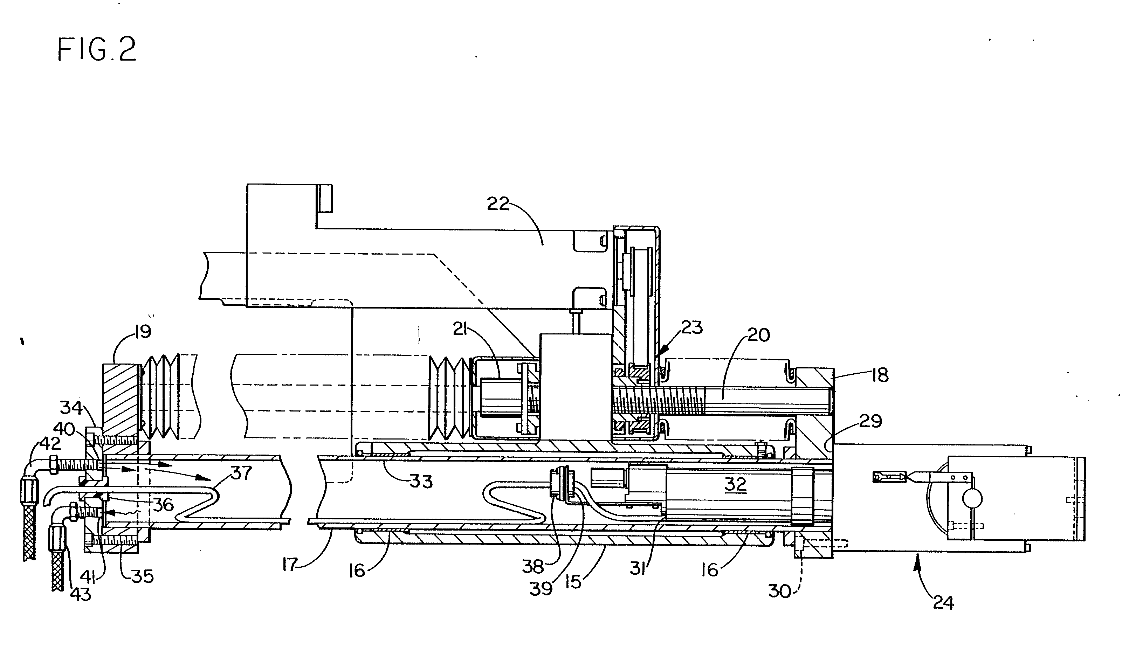

Referring to Figures 1 and 2, the platform 12 has vertical guidebars 13, for supporting and guiding a vertically movable housing 14. The vertically movable housing 14 has a generally horizontal housing portion 15, which is bored and fitted with guide bushings 16 (Figure 2), to guide a linearly movable member 17 which is movable along its longitudinal, horizontal axis. The member 17 has a pair of end yoke plates 18, 19 attached thereto and extending upward where they are rigidly connected to a non-rotatable ball screw 20 which is parallel to, and spaced from, the horizontal member 17. The ball screw 20 passes through a ball nut 21, which is rotatably supported in a block 44 carried on the housing portion 15. The ball nut 21 is driven by an electric drive motor 22 carried on the housing 14 and drivingly connected to the ball nut 21 by a belt drive 23 (Figure 2).

The front yoke plate 18 supports a wrist assembly 24. At the rear yoke plate 19, a pair of U-shaped flexible raceways 25, 26 are utilised to connect the flexible power transmission elements such as wires, cables, and hoses, from the rotatable platform 12 to the movable member 17. One end of the first flexible raceway 25 is affixed to the rotatable platform 12, and the other end is affixed to a bracket 27 carried by the vertically movable housing 14. The second raceway 26 is mounted to accommodate horizontal movement of the member 17 relative to the housing 14, by having one end affixed to the housing bracket 27, and having the other end affixed to a bracket 28 carried by the rear yoke plate 19. Thus, the cables and wires, etc. may be grouped in neat bundles for coordinate movements of the rear yoke plate 19 (i.e. in X and Y directions). The flexible raceway 26 is open at the yoke-supported bracket 28, so that the ends of electrical wires and hoses may be snaked out and brought to the rear end of the member 17.

Referring to Figure 2, the section through the member 17 illustrates that the wrist assembly 24 is mounted directly to the front yoke plate 18 which subtends the member 17 and ball screw 20. The wrist assembly 24 has a wrist flange or mounting face 29 and a plurality of cap screws 30 are received through the yoke plate 18 and into the face 29. A wrist drive motor 32 comprises a body 31 which extends rearwardly from the face 29 and is received within a bore in the tubular member 17. The bore forms a drive motor cavity 33, which extends to the rear of the member 17. The rear yoke plate 19 has an end cap 34 affixed thereto by cap screws 35. The cap 34 is drilled through and fitted with a grommet 36 to provide a tight seal around an electrical wire 37 received from the flexible raceway 26 of Figure 1. The electrical wire 37 extends loosely into the member 17 and carries an electrical connector 38 which is affixed to a connector port 39 on the body 31 of the drive motor 32. The electrical connector 38 may be any of a variety well-known in the art, for example, the threaded multi-pin connectors manufactured by the Amphenol Company. The end cap has two drilled and tapped ports 40, 41 to receive hose connectors 42, 43 in order that a fluid may be brought through one hose connector 42 into the interior of the member 17 to provide a fluid environment for the drive motor 32. When it is desired to have a circulating fluid, the fluid exits through a second hose connector 43 and returns via the flexible raceways 25, 26 to its fluid source (not shown).

While the motor cavity 33 is depicted as the interior of a tubular member 17, the member 17 may be machined from solid stock and drilled out to configure the cavity 33. Further, while the wrist flange 29 and end cap 34 have flat sealing faces, it may be appreciated that O-ring seals or gaskets may also be provided to insure a leak-proof assembly.

An inert atmosphere may therefore be provided for the drive motor 32 by supplying a control fluid such as nitrogen for example, which is relatively inexpensive, and the nitrogenous atmosphere will not support combustion. Additionally, a controlled temperature fluid may be circulated through the drive motor cavity 33 to cool the motor 32 and maintain a uniform operating temperature. Temperature control of the motor 32 may be desirable for many types of motors, including both electric and fluid powered motors.

In one instance, it may be desired to port fluid in one direction only, i.e. to the motor cavity 33, and let the fluid, such as cooling air, be exhausted to the atmosphere surrounding the robot 10. In such instance, a port 41 would be left open in the end cap 34, or the cap 34 could be manufactured as a half cap to allow the cooling air to exit.

In yet another instance, it may be desirable to fill the motor cavity 33 with a static fluid, in which case the end cap 34 may be plugged after filling the motor cavity 33.

While maintaining a positive gauge pressure within the motor cavity 33 is preferred, and will exclude the atmospheric contaminents, still another application of the controlling environment drive motor cavity 33 may be made when it is desired to evacuate the cavity 33 and maintain a vacuum therein. In such instance, the end cap port 41 may be used to pull a continuous vacuum on the drive motor cavity 33 or, alternatively, the end cap 34 may be plugged after pulling down a vacuum of sufficient gauge pressure.

It can be seen therefore by those skilled in the art, that the provision of a sealed drive motor cavity 33 which contains the wrist drive motor 32 is extremely advantageous for controlled the environment surrounding the drive motor 32, for a variety of purposes.

The fluid usable in the practice of this invention is preferably a non-flammable gas, such as for example air, nitrogen and dichlorodifluoromethane, and more preferably a non-inflammable, chemically inert gas, such as for example nitrogen, helium, and argon, which are well-known in the art. In the context of this invention, chemical inertness pertains to the non-reactivity with the materials of the various components of the apparatus of this invention.

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. An industrial manipulator (10) comprising a movable member (17) adapted to carry a work performing apparatus (24), the movable member (17) providing a cavity (33) in which a drive motor (32) for the work performing apparatus (24) is located, means (19, 34, 40, 41, 42, 43) being provided for maintaining a controlled environment in the cavity (33)

2. A manipulator according to Claim 1 wherein said means for maintaining a controlled environment in the cavity (33) is operative continuously to circulate fluid through said cavity.

3. A manipulator according to Claim 1 wherein said means for maintaining a controlled environment in the cavity (33) is operative to facilitate the delivery of a static fluid to the cavity and thereafter to retain the fluid in the cavity.

4. A manipulator according to one of Claims 2 and 3 wherein said fluid comprises:
   (a) a cooling fluid;
   (b) a chemically inert fluid;
   (c) a liquid;
   (d) a gas;
   (e) air.

5. An industrial manipulator according to Claim 1 wherein said means for maintaining a controlled environment in the cavity (33) is operative to facilitate the evacuation of the cavity and thereafter to retain a low pressure within the cavity.

6. An industrial manipulator (10) comprising:
   (a) a linearly movable member (17) adapted to receive a work performing apparatus (24) and defining a cavity (33), said cavity (33) being adapted:
      (i) to receive a motor (32) which is adapted to engage the work performing apparatus (24); and
      (ii) to receive a non-flammable fluid environment surrounding the motor (32);
   (b) a motor (32) mounted in said cavity (33);
   (c) a support means for supporting the member (17) for linear movement;and
   (d) a feed means for providing said fluid in said cavity (33).

7. A manipulator according to Claim 6 further including means (40, 41, 42, 43) for circulating the fluid through said cavity (33).

8. An industrial manipulator (10) comprising:
   (a) a linearly movable member (17) adapted to receive a work performing apparatus (24) and defining a cavity(33), the cavity (33) being adapted
      (i) to receive a motor (32) which is adapted to engage the work performing apparatus (24); and
      (ii) to receive a non-flammable environment surrounding the motor (32);
   (b) a motor (32) mounted in said cavity (33);
   (c) support means for supporting the member (17) for linear movement; and
   (d) means for providing a substantial vacuum in said cavity (33).

9. A manipulator according to any one of Claims 6, 7 and 8 wherein the member (17) comprises a plate (19, 34) at an end thereof opposite to the end (18) adapted to receive the work performing apparatus (24) and said plate (34) contains a port (40, 41) in fluid communication with said cavity (33).

10. A manipulator according to any one of the preceding claims wherein the manipulator is an industrial robot, and the work performing apparatus (24) is a wrist.

FIG. 1

13

25

27

19    26

28

14

20

18

15    17    24

12

11

FIG. 3

19

34

35

35    36

42    37

43

35    35

# FIG.2

0 245 530

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,E | WO-A-8 600 256 (FANUC LTD.)<br><br>* Claims 1,8,11 * & EP-A-0 187 862 | 1,3,4, 10 | B 25 J 19/00<br>B 25 J 18/02 |
| Y | | 6 | |
| A | | 9 | |
| X | EP-A-0 169 905 (MATSUSHITA ELECTRIC INDUSTRIAL CO. LTD.)<br>* Claims 1,3 * | 1-5,7, 10 | |
| Y | | 6,8 | |
| A | EP-A-0 138 461 (AMERICAN TELEPHONE AND TELEGRAPH CO.)<br>* Page 8, lines 12-18; claims 1,2,6,7 * | 2-5,7 | **TECHNICAL FIELDS SEARCHED (Int. Cl.4)**<br><br>B 25 J |
| Y | FR-A-2 545 029 (LA TELEMECANIQUE ELECTRIQUE)<br>* Claims 1,2 * | 6,8 | |
| A | | 9 | |

---   -/-

The present search report has been drawn up for all claims

| Place of search | Date of completion of the search | Examiner |
|---|---|---|
| THE HAGUE | 12-01-1987 | LAMMINEUR P.C.G. |

# EUROPEAN SEARCH REPORT

Application number

EP 86 10 6444

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| E | WO-A-8 603 158  (FANUC LTD.) <br><br> * Abstract * <br><br> ----- | 1,2,4, 7,10 | |

TECHNICAL FIELDS SEARCHED (Int. Cl.4)

The present search report has been drawn up for all claims

| Place of search | Date of completion of the search | Examiner |
|---|---|---|
| THE HAGUE | 12-01-1987 | LAMMINEUR P.C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82